# EUROPEAN PATENT SPECIFICATION

(11) **EP 2 044 673 B1**
(45) Date of publication and mention of the grant of the patent: **12.05.2010**
(21) Application number: 07787763.7
(22) Date of filing: 20.07.2007
(51) Int. Cl.: H02K 1/27, H02K 17/26

(54) **AN ELECTRIC MOTOR**
ELEKTROMOTOR
MOTEUR ÉLECTRIQUE

(30) Priority: 25.07.2006 TR 200603877
(43) Date of publication of application: 08.04.2009
(73) Proprietor: Arçelik Anonim Sirketi, 34950 Istanbul (TR)
(72) Inventor: TEKKALMAZ, Tekin, 34950 Istanbul (TR); ALBAS CIRPANLI, Gunsu, 34950 Istanbul (TR); AYVAZOGLU, Cumhur, 34950 Istanbul (TR)
(86) International application number: PCT/EP2007/057509
(87) International publication number: WO 2008/012271

(56) References cited:
- EP-A- 1 519 471
- JP-A- 5 146 103
- JP-A- 2001 258 187
- JP-A- 2006 042 582

## Description

The present invention relates to a line start permanent magnet motor that operates asynchronously at the start-up and synchronously after start up.

Particularly in implementations wherein high start up moment and high operational efficiency is important, for example in compressors of cooling devices, hybrid type electric motors having asynchronous motor properties at the start, and synchronous motor features in continuous operation are utilized. Hybrid type electric motors are generally called "line start permanent magnet motor". In the rotor of the hybrid type electric motor, in addition to the magnetic cage (squirrel cage) structure formed with rotor bars having conductive and easily-shaped properties such as aluminum in the rotor slots and the end-rings that mechanically and electrically join these rotor bar ends on both surfaces of the rotor, permanent magnets are utilized that are emplaced inside the rotor. The hybrid motor starts asynchronously by means of the magnetic cage at the rotor and operates synchronously after start up by means of the permanent magnets placed in the rotor. The problem that arises in producing this type of rotors is reaching high temperatures while injecting aluminum material into the rotor slots and the magnets embedded in the rotor losing their magnetic properties due to high temperatures. In order to solve this problem, the magnets can be placed in the rotor after the aluminum injection process however, in order to place the magnets, particularly the shape of the end ring is changed depending on the layout arrangement of the magnets and the shape variations in the end rings result in magnetic flux irregularities and disruptions in the rotor balance.

In the European patent application no. EP1519471, a permanent magnet synchronous motor is described which comprises a stator, a rotor and permanent magnets. The rotor comprises a rotor iron core, a plurality of conductor bars accommodated within corresponding slots in the rotor iron core and a starter squirrel cage conductor formed of a plurality of short-circuit rings positioned at axially opposite ends of the rotor iron core. Furthermore, the rotor includes magnet retaining slots on the inner sides of the conductor bars close to the periphery of the rotor and the permanent magnets are inserted in these magnet retaining slots. End plates made of a non-magnetizable material is positioned between one or two faces of the rotor so as to prevent dislocation of magnets during operation. Shaping the short circuit rings depending on the magnet layout arrangement and making the cross-section thinner at some places result in the increase of electrical resistance and balance problems arise. Furthermore, a separate path has to be opened in the rotor core to inject the aluminum that acts as a rivet in order to fix the end plates in the production of this type of rotor.

In the United States of America patent application no. US2004256939, the rotor of a line start permanent magnet motor and a manufacturing method thereof is described. A supporting plate is not used at the side wherein magnets are inserted for preventing displacement of magnets embedded into the rotor core during operation but instead the end ring is formed so as to cover the magnet slots and the end ring is provided with magnet paths thereon sized for passing through the permanent magnets. After the injection process of end rings and the conductor bars on the rotor core is completed, the magnets are passed through the magnet paths to be embedded in the rotor core and afterwards the fixing members are mounted on the magnet paths for preventing the magnets from being separated. The magnet paths make the production of end rings more difficult, provide a barrier for the magnetic flux and increase electrical resistance.

In the Japanese patent application no. JP2001258187, permanent magnet embedded rotor of permanent magnet motor is described. In the permanent magnet embedded rotor of a permanent magnet motor, projecting pieces for positioning the permanent magnet are formed at the opposite ends of the permanent magnet embedding hole and the permanent magnet is secured to the laminated core of the rotor by bending the projecting pieces in the plane of the lamination for positioning the permanent magnet.

The aim of the present invention is the realization of a line start permanent magnet motor of which the start-up and operational efficiency is enhanced, comprising a low cost rotor with a simplified manufacturing process.

The electric motor realized in order to attain the aim of the present invention is explicated in the attached claims.

In the electric motor of the present invention, stoppers are provided on the last rotor lamination on the side of the second surface depending on the direction of injecting aluminum into the rotor core, formed by cutting the steel sheet used in producing the rotor lamination, allowing the securing of magnets by opening the top of the magnet inserting holes when folded outwards from the rotor lamination, covering over the magnet inserting holes when folded towards the rotor lamination and preventing the displacement of the magnets.

The stoppers are produced in the shearing mould in a form not folded outwards from the rotor lamination and afterwards are folded outwards from the rotor lamination with a separate bending mould or by manual operation.

The stoppers cover an area at the center of the narrow rectangular shaped magnet inserting holes, smaller than the magnet inserting hole, and can easily be folded to be opened or closed particularly by simple hand tools.

The extensions of the stoppers are formed in the shearing mould wherein the rotor laminations are produced, by opening thin U shaped slits that intersect in the lengthwise direction the area wherein the magnet inserting holes are situated.

In another production method, the stoppers can be manufactured in folded form in the shearing mould wherein rotor laminations are produced and the rotor lamination that comes out of the shearing mould are directly grouped together with the other rotor laminations to form the rotor core.

The stoppers prevent the displacement of the magnets arranged in the magnet inserting holes in the core after the aluminum injection process, the use of an additional element is not required to prevent displacement of the magnets and the balance problem that can be caused by additional elements is avoided.

The electric motor of the present invention is used in implementations wherein start-up moment and operational efficiency is important such as compressors of cooling devices.

The electric motor realized in order to attain the aim of the present invention is illustrated in the attached figures, where:

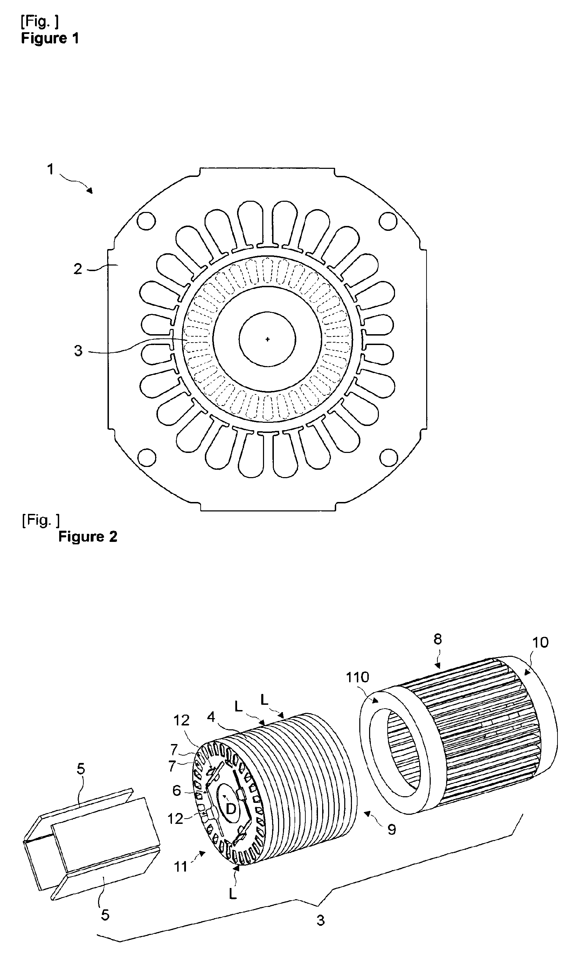

Figure 1 - is the schematic view of an electric motor.
Figure 2 - is the exploded perspective view of a rotor core, end rings, conductor bars and the magnets.

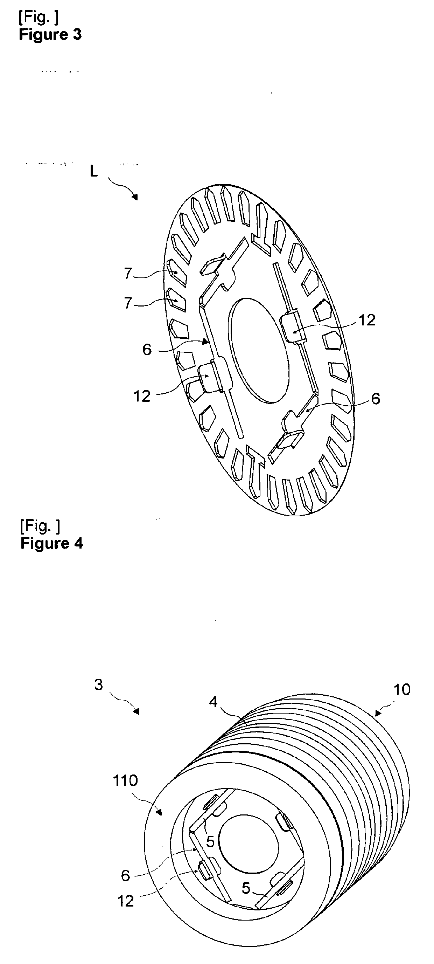

Figure 3 - is the perspective view of a rotor lamination with stoppers disposed thereon.
Figure 4 - is the perspective view of a rotor lamination with the magnets arranged and the stoppers in the open position.

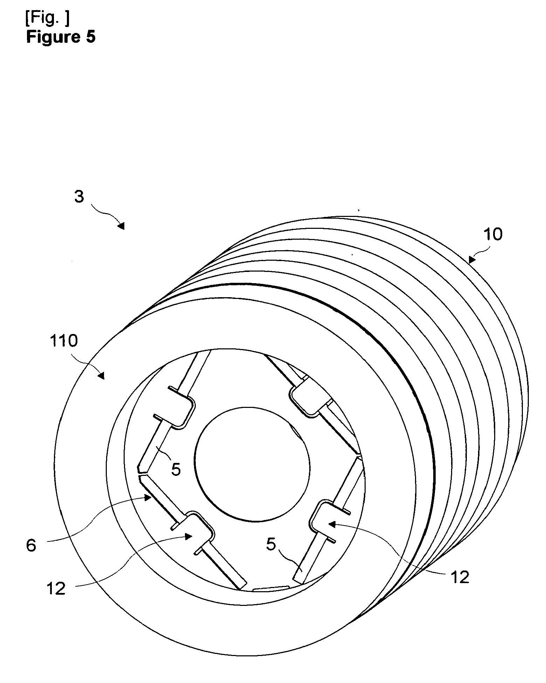

Figure 5 - is the perspective view of a rotor lamination with the magnets arranged and the stoppers in the closed position.

The elements illustrated in the figures are numbered as follows:
- 1.: Electric motor
- 2.: Stator
- 3.: Rotor
- 4.: Core
- 5.: Magnet
- 6.: Magnet inserting hole
- 7.: Rotor slot
- 8.: Conductor bar
- 9.: First surface
- 10.: , 110. End ring
- 11.: Second surface
- 12.: Stopper

The line start permanent magnet motor (1) comprises a stator (2) and a rotor (3).

The rotor (3) comprises a core (4) of cylindrical configuration with a shaft hole (D) at the center formed of magnetic steel rotor laminations (L) stacked on top of each other, one or more magnets (5) disposed by being inserted into the core (4) in the axial direction, providing synchronous operation, one or more magnet inserting holes (6) disposed around the shaft hole (D) wherein the magnets (5) are inserted, more than one rotor slot (7) disposed at a region near the outer side of the core (4), extending in the axial direction such that the skew angle is zero or different from zero, in the same direction as the shaft hole (D) axis of the core (4) or in a sloped direction with respect to the shaft hole (D) axis, more than one conductor bar (8) formed by injecting aluminum into the rotor slots (7) in the injection mould, a first surface (9) situated at the aluminum injected side of the core (4), a first end ring (10) providing the connection of the conductor bar (8) ends to each other at the first surface (9), a second surface (11) situated at the side wherein the injected aluminum goes out of the core (4) and a second end ring (110) disposed on the second surface (11), providing the connection of the conductor bar (8) ends.

During the production of the rotor (3) the core (4) is formed by stacking the rotor laminations (L) on top of each other after being shaped in a shearing mould, with the shaft hole (D), rotor slots (7) and magnet inserting holes (6) provided thereon and aluminum is injected from the first surface (9) by emplacing the core (4) in the aluminum injection mould. While aluminum is injected into the core (4) from the first surface (9), the penetration of aluminum material into the magnet inserting holes (6) and the shaft hole (D) is prevented by various methods. The magnets (5) are arranged in the magnet inserting holes (6) after the aluminum injection process and thus the magnets (5) are prevented from being affected by high temperatures.

The rotor (3) of the present invention comprises one or more stoppers (12) formed as part of the last rotor lamination (L) that are provided over the magnet inserting holes (6) on the last rotor lamination (L) on the second surface (11) side of the core (4), by cutting the steel sheet material used in producing the rotor lamination (L), allowing the insertion of magnets (5) by opening the top of the magnet inserting holes (6) when folded outwards from the rotor lamination (L) plane, covering over the magnet inserting holes (6) when folded towards the rotor lamination (L) plane after the magnet (5) is placed in the magnet inserting hole (6) thus preventing the displacement of the magnet (5).

The stopper (12) covers an area at the center of the magnet inserting hole (6) shaped as a narrow rectangle, that is smaller than the magnet inserting hole (6). The stopper (12) is not required to cover the entire magnet inserting hole (6) in order to prevent displacement of the magnet (5), covering only a small area at the center of the magnet inserting hole (6) is sufficient. Since the area of the stopper (12) is small, it can easily be folded to be opened or closed particularly by manual operation.

The extensions of the stoppers (12) are formed in the shearing mould wherein rotor laminations (L) are produced, by opening a thin U shaped slit that intersects the area wherein the magnet inserting holes (6) are situated in the lengthwise direction. The area surrounded by the U shaped slit opened in the rotor lamination (L) forms the stopper (12). When the rotor laminations (L) are grouped, a single rotor lamination (L) with stoppers (12) arranged thereon is disposed on the second surface (11) side of the core (4).

The stoppers (12) are produced in the shearing mould in a form not folded outwards from the rotor lamination (L) and afterwards the stoppers (12) are folded outwards from the rotor lamination (L) by means of a separate bending mould or by manual operation.

In another production method, the stoppers (12) can be manufactured in the shearing mould as folded outwards from the rotor laminations (L). In this embodiment, the rotor laminations (L) that form the core (4) and the single rotor lamination (L) with stoppers (12) thereon can be produced as a group in a single shearing - bending mould.

During the production of the rotor (3) the core (4) is formed by stacking the rotor laminations (L) on top of each other with the shaft hole (D), rotor slots (7) and magnet inserting holes (6) provided thereon and the core (4) is grouped by disposing the rotor lamination (L) having stoppers (12) thereon in the open position at the very end of the core (4) on the side of the second surface (11). After the core (4) is placed in the injection mould, aluminum is injected from the first surface (9). Firstly, the first end ring (10) is formed on the first surface (9) by the injected aluminum material and afterwards the conductor bars (8) are formed by allowing aluminum to flow into the rotor slots (7). The aluminum injected into the core (4) goes out from the rotor slots (7) of the rotor lamination (L) on the second surface (11) enabling to form the second end ring (110). Since the stoppers (12) of the rotor lamination (L) at the second surface (11) are in the outwards folded position, the magnets (5) can easily be inserted into the magnet inserting holes (6). After the magnets (5) are secured, the stoppers (12) are folded over the magnet inserting holes (6) preventing the displacement of the magnets (5).

In the rotor (3) of the present invention, the displacement of the magnets (5) inserted into the magnet inserting holes (6) in the core (4) after the aluminum injection process is prevented by means of the stoppers (12) formed on one rotor lamination (L) situated at the end of the rotor laminations (L) forming the core (4), the use of an additional element is not required for preventing the displacement of the magnets (5) and the problem of balance that might be caused by the additional elements is avoided.

## Claims

1. An electric motor (1) comprising a rotor (3) having a core (4) formed of rotor laminations (L), one or more magnets (5) inserted into the core (4), one or more magnet inserting holes (6) wherein the magnets (5) are inserted, more than one rotor slot (7), more than one conductor bar (8) formed by injecting aluminum into the rotor slots (7) in an injection mould, a first surface (9) situated on the aluminum injected side of the core (4), a first end ring (10) providing the connection of the conductor bar (8) ends at the first surface (9) with each other, a second surface (11) situated on the side of the core (4) wherein the injected aluminum goes out, a second end ring (110) providing the connection of the conductor bar (8) ends on the second surface (11) and one or more stoppers (12) formed as part of a rotor lamination (L), and provided over the magnet inserting holes (6) on the rotor lamination (L) on the second surface (11) side of the core (4), by cutting the steel sheet material used in producing the rotor lamination (L), **characterized in that**, before the insertion of the magnets (5) into the magnet insertion holes (6), the stoppers (12) are folded outwards from the rotor lamination (L) plane, therefore allowing the insertion of the magnets (5) into the magnet inserting holes (6) by leaving open the top of the magnet inserting holes (6), and are folded towards the rotor lamination (L) plane after the magnets (5) are placed into the magnet inserting holes (6), therefore covering the magnet inserting holes (6) and preventing the displacement of the magnets (5).

2. An electric motor (1) as in Claim 1, **characterized by** the stopper (12) that covers over an area at the center of the magnet inserting hole (6) that is smaller than the magnet inserting hole (6).

3. An electric motor (1) as in Claim 1 or 2, **characterized by** the stopper (12), the extensions of which are formed in the shearing mould wherein rotor laminations (L) are produced, by opening a thin U shaped slit that intersects the area wherein the magnet inserting holes (6) are situated.

4. An electric motor (1) as in any one of the above claims, **characterized by** the stopper (12) that is produced in the shearing mould in a form that is folded outwards from the rotor lamination (L).

## Patentansprüche

1. Elektromotor (1), umfassend einen Rotor (3) mit einem Kern (4), der aus Rotorlamellierungen (L) gebildet ist, einen oder mehrere Magnete (5), die in den Kern (4) eingesetzt sind, eine oder mehrere Magneteinsatzöffnungen (6) in die die Magnete (5) gesetzt werden, mehr als einen Rotorschlitz (7), mehr als eine Leitschiene (8), die ausgebildet ist, indem in einer Spritzgießform Aluminium in die Rotorschlitze (7) gespritzt wurde, eine erste Fläche (9), die an der Aluminiumeinspritzseite des Kerns (4) angeordnet ist, einen ersten Endring (10), der das Verbinden der Enden der Leitschiene (8) an der ersten Fläche (9) miteinander vorsieht, eine zweite Fläche (11), die an der Seite des Kerns (4) angeordnet ist, an der das eingespritzte Aluminium austritt, einen zweiten Endring (110), der das Verbinden der Enden der Leitschiene (8) an der zweiten Fläche (11) vorsieht, und ein oder mehrere Stoppbleche (12), die als Teil der Rotorlamellierung (L) ausgebildet sind, und die über den Magneteinsatzöffnungen (6) an der Rotorlamellierung (L) an der Seite des Kerns (4) mit der zweiten Fläche (11) ausgebildet sind, indem das Blechmaterial geschnitten wurde, das zur Herstellung der Rotorlamellierung (L) verwendet wurde, **dadurch gekennzeichnet, dass** vor dem Einsetzen der Magnete (5) in die Magneteinsatzöffnungen (6) die Stoppbleche (12) von der Ebene der Rotorlamellierung (L) nach außen gefaltet werden, wodurch die Magnete (5) in die Magneteinsatzöffnungen (6) eingesetzt werden können, indem die Oberseite der Magneteinsatzöffnung (6) offen gelassen wird, und zur Ebene der Rotorlamellierung (L) gefaltet werden, nachdem die Magnete (5) in die Magneteinsatzöffnungen (6) gesetzt wurden, wodurch sie die Magneteinsatzöffnungen (6) abdecken und eine Verlagerung der Magnete (5) verhindern.

2. Elektromotor (1) nach Anspruch 1, **dadurch gekennzeichnet, dass** das Stoppblech (12) einen Bereich in der Mitte der Magneteinsatzöffnung (6) abdeckt, der kleiner ist als die Magneteinsatzöffnung (6).

3. Elektromotor (1) nach Anspruch 1 oder 2, **dadurch gekennzeichnet, dass** bei der Ausbildung der Rotorlamellierung (L) in der Scherform Verlängerungen des Stoppblechs (12) ausgebildet werden, indem ein dünner U-förmiger Schlitz geöffnet wird, der den Bereich schneidet, in dem die Magneteinsatzöffnungen (6) angeordnet sind.

4. Elektromotor (1) nach einem der vorangehenden Ansprüche, **dadurch gekennzeichnet, dass** das Stoppblech (12) in einer Scherform in einer Form ausgebildet wird, in der es von der Rotorlamellierung (L) nach außen gefaltet ist.

## Revendications

1. Un moteur électrique (1) comprenant un rotor (3) ayant un noyau (4) formé des feuilletages de rotor (L), un ou plusieurs aimant (5) insérés dans le noyau (4), un ou plusieurs trous d'insertion d'aimant (6) à travers lesquels les aimants (5) sont insérés, plus d'une fente de rotor (7), plus d'une barre conductrice (8) formé par l'injection d'aluminium dans les fentes de rotor (7) dans un moule d'injection, une première surface (9) située sur le côté du noyau (4) à travers lequel l'aluminium est injecté , un premier anneau d'extrémité (10) permettant la connexion l'une à l'autre des extrémités de la barre conductrice (8) sur la première surface (9), une seconde surface (11) située sur le côté du noyau (4) à travers lequel l'aluminium injecté sort, un second anneau d'extrémité (110) permettant la connexion des extrémités de la barre conductrice (8) sur la seconde surface (11) et une et plusieurs butées (12) formées dans le cadre d'un feuilletage de rotor (L), et disposées sur les trous d'insertion d'aimant (6) sur le feuilletage de rotor (L) sur le côté de seconde surface (11) du noyau (4), en coupant le matériau en feuille d'acier utilisé pour la production du feuilletage de rotor (L), **caractérisé en ce que**, avant l'insertion des aimants (5) dans les trous d'insertion d'aimant (6), les butées (12) sont repliés vers l'extérieur du plan de feuilletage de rotor (L), ainsi permettant l'insertion des aimants (5) dans les trous d'insertion d'aimant (6) en laissant ouverte la partie supérieure des trous d'insertion d'aimant (6), et sont repliés vers le plan de feuilletage de rotor (L) après les aimants (5) sont placés dans les trous d'insertion d'aimant (6), ainsi couvrant les trous d'insertion d'aimant (6) et empêchant le déplacement des aimants (5).

2. Un moteur électrique (1) selon la Revendication 1, **caractérisé par** la butée (12) qui couvre une région au centre du trou d'insertion d'aimant (6) qui est plus petit que le trou d'insertion d'aimant (6).

3. Un moteur électrique (1) selon la Revendication 1 ou 2, **caractérisé par** la butée (12), dont les extensions sont formées dans le moule de découpage dans lequel les feuilletages de rotor (L) sont produits, en ouvrant une mince fente en forme de U qui coupe la région dans laquelle les trous d'insertion d'aimant (6) sont situés.

4. Un moteur électrique (1) selon l'une quelconque des revendications précédentes, **caractérisé par** la butée (12) qui est produit dans le moule de découpage dans une forme qui est repliée vers l'extérieur du feuilletage de rotor (L).
